# EUROPÄISCHE PATENTANMELDUNG

(11) **EP 1 777 527 A2**
(43) Veröffentlichungstag der Anmeldung: **25.04.2007**
(21) Anmeldenummer: 06122435.8
(22) Anmeldetag: 17.10.2006
(51) Int. Cl.: G01P 15/08

(54) **Vorrichtung zur Erkennung einer Drehzahländerung**

(30) Priorität: 24.10.2005 DE 102005050847
(71) Anmelder: Dematic GmbH & Co. KG, 63073 Offenbach am Main (DE)
(72) Erfinder: Stehr, Peter, 63179, Obertshausen (DE)
(74) Vertreter: Moser & Götze

(57) **Zusammenfassung**

Die Erfindung betrifft eine Vorrichtung zur Erkennung einer Drehzahländerung eines Rotors (1), umfassend den Rotor (1) und einen Sensor (7). Bisherige Lösungen erfordern einen unwirtschaftlichen Aufwand in Software und Hardware. Daher hat es sich die Erfindung zur Aufgabe gemacht, eine Vorrichtung der eingangs genannten Art derart weiterzubilden, dass sie weniger aufwändig ist, auch rauen Betriebsbedingungen standhält und gleichzeitig eine hohe Zuverlässigkeit der Erkennung einer Drehzahländerung bietet. Zur Lösung der erfindungsgemäßen Aufgabe wird vorgeschlagen, dass der Rotor (1) in einem axialen Abschnittsbereich von einer Hülse umgeben ist, welche relativ beweglich auf dem Rotor (1) gelagert ist, wobei eine Führung(5) vorgesehen ist, die derart beschaffen ist, dass bei einer Drehung der Hülse (3) relativ zu dem Rotor (1) in Umfangsrichtung (9) sich die Hülse (3) in eine Axialrichtung(12) des Rotors (1) bewegt, wobei der Sensor (7) die Axialbewegung der Hülse (3) erfasst und in Abhängigkeit von der Axialbewegung ein elektrisches Signal (8) erzeugt, welches eine Drehzahländerung anzeigt.

## Beschreibung

Die Erfindung betrifft eine Vorrichtung zur Erkennung einer Drehzahländerung eines Rotors, umfassend den Rotor und einen Sensor.

Bei Steuerungs- und Regelaufgaben im Anlagenbau werden häufig Informationen über den Zustand sich drehender Bauelemente benötigt. Hierbei sind insbesondere Drehzahlen und deren Änderungen von Interesse. In speziellen Anwendungsfällen, insbesondere bei Förderanlagen, kann einen Interesse ausschließlich an einer Drehzahländerung bestehen, beispielsweise, wenn festzustellen ist, ob sich ein Bauelement dreht oder nicht. Auch Bauelemente ohne konstruktiv vorgesehenen eigenen Antrieb, beispielsweise Laufrollen einer Gefälleförderstrecke, Laufräder an Straßenfahrzeugen oder Luftfahrzeugen werden in technischen Anwendungen bisweilen auf Drehzahländerungen überwacht. Ein bekanntes Verfahren zur Signalgewinnung ist der Einsatz von Inkrementalgebern, welche die aktuelle Drehzahl messen, aus welcher eine Änderung derselben berechnet werden kann. Kommt es jedoch nur darauf an, das Vorliegen einer Drehzahländerung nachzuweisen, erscheint eine Anordnung mit einem Inkrementalgeber, wie sie beispielsweise aus dem japanischen Abstract mit der Veröffentlichungsnummer JP09269333 A bekannt ist, zu aufwendig. Daneben sind die elektronischen Bauelemente von Inkrementalgebern häufig störungsanfällig, da sie in direkter Nähe von bisweilen hochfrequent drehenden Bauelementen Einsatz finden, was unter anderem zur schnelleren Verschmutzung führen kann. Hervorzuheben ist auch der hohe Rechenaufwand, eine Drehzahländerung festzustellen.

Die Erfindung hat es sich daher zur Aufgabe gemacht, eine Vorrichtung der eingangs genannten Art derart weiterzubilden, dass sie weniger aufwändig ist, auch rauen Betriebsbedingungen standhält und gleichzeitig eine hohe Zuverlässigkeit der Anzeige einer Drehzahländerung bietet.

Zur Lösung der erfindungsgemäßen Aufgabe wird vorgeschlagen, dass der Rotor in einem axialen Abschnittsbereich von einer Hülse umgeben ist, welche relativ beweglich auf dem Rotor gelagert ist, wobei eine Führung vorgesehen ist, die derart beschaffen ist, dass bei einer Drehung der Hülse relativ zu dem Rotor in Umfangsrichtung sich die Hülse in eine Axialrichtung des Rotors bewegt, wobei der Sensor die Axialbewegung der Hülse erfasst und in Abhängigkeit von der Axialbewegung ein elektrisches Signal erzeugt, dass eine Drehzahländerung anzeigt.

Ein entscheidender Vorteil der erfindungsgemäßen Vorrichtung ist in der außerordentlichen Einfachheit der Anordnung zu sehen, welche einerseits mit großen Kostenersparnissen gegenüber herkömmlichen Lösungen einhergeht und andererseits eine zuverlässige Funktionsweise bei auch widrigen Betriebsbedingungen gewährleistet.

Zweckmäßig weist die Führung eine sich um den Rotor erstreckende Schraubenlinienform auf, so dass eine Umfangsbewegung der Hülse relativ zu dem Rotor ein axiales Ausrücken der Hülse auf dem Rotor zuverlässig bewirkt.

Eine zweckmäßige Weiterbildung der Erfindung sieht vor, dass die Führung eine schraubenlinienförmige Nut auf der dem Rotor zugewendeten Fläche in der Hülse aufweist und ein Führungselement an dem Umfang des Rotors vorgesehen ist, wobei das Führungselement mit der Nut in Eingriff steht. Auf diese Weise wird für die Kopplung die Axialbewegung an die Umfangsrelativbewegung der Hülse zu dem Rotor keine als gesondertes Bauteil ausgebildete Führung erforderlich, sondern diese ist integraler Bestandteil der Hülse. Bei hohen Drehzahlen kann es sinnvoll sein, die Nut bzw. die Führung über den Umfang der Hülse bzw. des Rotors symmetrisch auszubilden, so dass keinerlei Unwucht entsteht. Ggf. können mehrere Führungen vorgesehen werden um ein Verkannten der Hülse auf dem Rotor zu vermeiden. Die Hülse kann in ihrer axialen Erstreckung auch gegenüber ihrem Durchmesser bzw. dem Durchmesser des Rotors klein ausgebildet sein, so dass es sich im Wesentlichen um einen Ring handelt.

Mit Vorteil kann der Sensor derart angeordnet und ausgebildet sein, dass eine Axialbewegung der Hülse von dem Sensor erkannt wird, indem der Sensor die Verringerung des Abstands zwischen dem Sensor und der Hülse erfasst. Diese berührungslose Messung ist besonders verschleißfrei und genügt höchsten Anforderungen an Stabilität auch bei widrigen Betriebsbedingungen. Eine etwas einfachere Ausbildung des Sensors ist möglich, wenn dieser das Signal generiert im Fall, dass einer Axialbewegung der Hülse bei Drehzahländerung zu einem Berühren der Hülse oder eines mit der Hülse verbundenen Bauteils an einer Kontaktfläche des Sensors führt.

Damit sich die Hülse stets in einer definierten Lage befindet, kann es sinnvoll sein, diese mittels eines elastischen Elementes innerhalb einer bestimmten Axialposition zu halten, wobei eine Drehzahländerung einer Relativbewegung der Hülse zu dem Rotor in Umfangsrichtung und in Axialrichtung entgegen einer Rückstellkraft aus dem elastischen Element bewirkt. Misst der Sensor den Abstand einer axialen Stirnfläche der Hülse zu einer Referenzfläche des Sensors kann auf diese Weise sogar eine Drehzahländerung quantifiziert werden, insbesondere hinsichtlich der Art bzw. des Vorzeichens erkannt werden. Eine andere Möglichkeit, sicher zu erkennen, ob es sich bei der Drehzahländerung um eine Verzögerung oder eine Beschleunigung handelt, besteht darin, beiderseitig der Hülse eine axiale Stirnfläche vorzusehen, der jeweils ein eigener Sensor zugeordnet ist und auf diese Weise Drehzahlveränderungen sicher hinsichtlich Verzögerung oder Beschleunigung zu erkennen. Auch hierbei kann die Halterung der Hülse in einer bestimmten Axialposition an dem Rotor mittels eines elastischen Elements von Vorteil sein und ggf. auch eine quantitative Aussage über Drehzahländerung ermöglichen.

Im Folgenden ist die Erfindung anhand eines speziellen Ausführungsbeispiels unter Bezugnahme auf Zeichnungen ohne Einschränkungswirkung näher erläutert. Es zeigen:
- Figur 1: eine schematische und perspektivische Darstellung einer erfindungsgemäßen Vorrichtung,
- Figur 2: einen Schnitt gemäß A-A aus Figur 1 und
- Figur 3: die Vorrichtung aus Figur 1 mit einer anderen Axialposition der Hülse aufgrund einer Drehzahländerung.

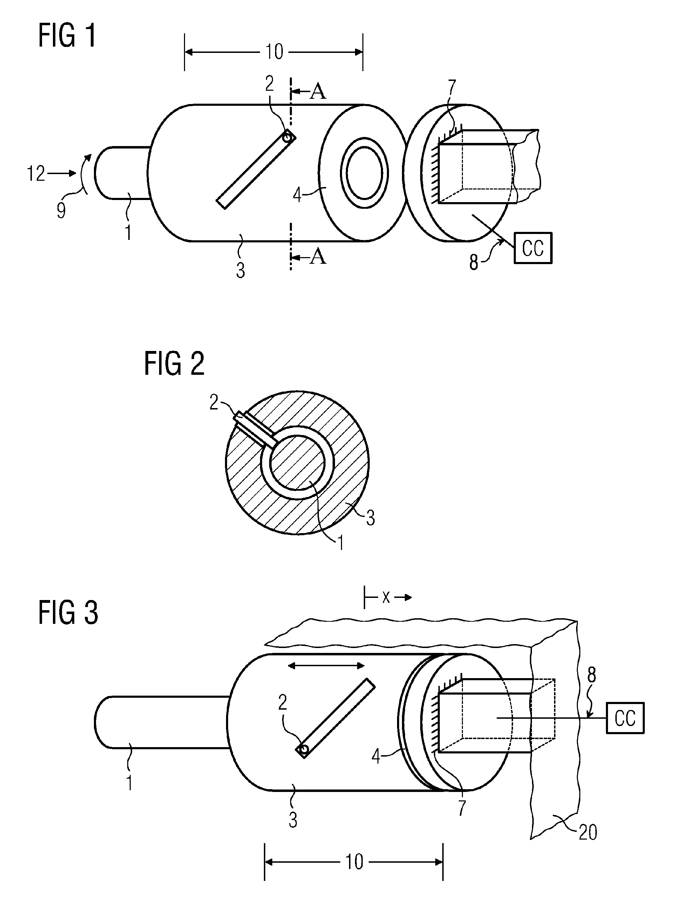

Wesentliche Bestandteile der erfindungsgemäßen Vorrichtung dargestellt in Figur 1 sind ein Rotor 1, eine Hülse 3, eine Führung 5 mit einem Führungselement 2 und einer Nut 6 in der Hülse 3 sowie ein Sensor 7, der an eine zentrale Steuerung CC elektrische Signale 8 übermittelt.

In einem Abschnittsbereich 10, der einem Endbereich des Rotors 1 entspricht, ist der Rotor 1 von der Hülse 3 umgeben, wobei die Hülse 3 in Umfangsrichtung 9 und in Axialrichtung 12 zu dem Rotor 1 relativ beweglich ist.

Mittels der Führung 5 ist die Bewegung der Hülse 3 in Umfangsrichtung 9 eindeutig an die Bewegung in Axialrichtung 12 gekoppelt, wobei die Nut 6 der Führung 5 eine sich um den Rotor 1 erstreckende Schraubenlinienform 15 aufweist.

Kommt es zu einer Drehzahländerung des Rotors 1 bewirkt die Trägheit der Hülse 3 eine Relativbewegung dieser in Umfangsrichtung 9 zu dem Rotor 1 und aus der Führung 5 eine Bewegung der Hülse 3 in Axialrichtung 12. Hierbei nähert sich eine axiale Fläche 4 der Hülse 3 dem Sensor 7 und dieser erzeugt ein elektrisches Signal 8. Figur 1 zeigt zusätzlich ein nicht obligatorisches elastisches Element 17, welches die Hülse 3 bei konstanter Drehzahl in einer bestimmten Axialposition hält.

Den Zustand der Drehzahländerung und somit der Auslenkung der Hülse 3 auf dem Rotor 1 zeigt Figur 3.

Der Sensor 7 ist gemeinsam mit der Hülse 3 von einem Gehäuse 20 umgeben, an dem der Sensor 7 befestigt ist.

### Bezugszeichenliste

- CC: zentrale Steuerung
- 1: Rotor
- 2: Führungselement
- 3: Hülse
- 4: axiale Fläche
- 5: Führung
- 6: Nut
- 7: Sensor
- 8: elektrisches Signal
- 9: Umfangsrichtung
- 10: Abschnittsbereich
- 12: Axialrichtung
- 15: Schraubenlinienform
- 17: elastisches Element
- 20: Gehäuse

## Patentansprüche

1. Vorrichtung zur Erkennung einer Drehzahländerung eines Rotors (1), umfassend den Rotor (1) und einen Sensor (7),
**dadurch gekennzeichnet,**
**dass** der Rotor (1) in einem axialen Abschnittsbereich von einer Hülse umgeben ist, welche relativ beweglich auf dem Rotor (1) gelagert ist, wobei eine Führung(5) vorgesehen ist, die derart beschaffen ist, dass bei einer Drehung der Hülse (3) relativ zu dem Rotor (1) in Umfangsrichtung (9) sich die Hülse (3) in eine Axialrichtung(12) des Rotors (1) bewegt, wobei der Sensor (7) die Axialbewegung der Hülse (3) erfasst und in Abhängigkeit von der Axialbewegung ein elektrisches Signal (8) erzeugt, welches eine Drehzahländerung anzeigt.

2. Vorrichtung nach Anspruch 1, **dadurch gekennzeichnet, dass** die Führung (5) eine sich um den Rotor (1) ersteckende Schraubenlinienform aufweist.

3. Vorrichtung nach Anspruch 1, **dadurch gekennzeichnet, dass** die Führung eine schraubenlinienförmige Nut (6) auf der dem Rotor (1) zugewendeten Fläche in der Hülse (3) aufweist und ein Führungselement (2) an dem Umfang des Rotors (1) vorgesehen ist, wobei das Führungselement (2) mit der Nut (6) in Eingriff steht.

4. Vorrichtung nach Anspruch 1, **dadurch gekennzeichnet, dass** die Hülse (3) von einem Gehäuse (20) umgeben ist und der Sensor (7) stirnseitig einer axialen Fläche (4) der Hülse (3) angeordnet ist.

5. Vorrichtung nach Anspruch 1, **dadurch gekennzeichnet, dass** der Sensor (7) derart angeordnet und ausgebildet ist, dass eine Axialbewegung der Hülse (3) von dem Sensor (7) erkannt wird, indem der Sensor (7) die Verringerung des Abstands zwischen dem Sensor (7) und der Hülse (3) erfasst.

6. Vorrichtung nach Anspruch 1, **dadurch gekennzeichnet, dass** der Sensor (7) derart angeordnet und ausgebildet ist, dass eine Axialbewegung der Hülse (3) von dem Sensor (7) erkannt wird, indem die Hülse (3) oder ein mit der Hülse (3) verbundenes Bauteil den Sensor (7) berührt.
